# EUROPEAN PATENT APPLICATION

(11) **EP 2 458 896 A1**
(43) Date of publication of application: **30.05.2012**
(21) Application number: 09847981.9
(22) Date of filing: 27.11.2009
(51) Int. Cl.: H04W 4/00

(54) **METHOD AND DEVICE FOR SHARING TELEPHONE NUMBER INFORMATION**

(30) Priority: 03.08.2009 CN 200910162295
(71) Applicant: ZTE Corporation, Shenzhen, Guangdong 518057 (CN)
(72) Inventor: GAI, Mengmeng, Shenzhen Guangdong 518057 (CN); GUO, Hongxing, Shenzhen Guangdong 518057 (CN); DONG, Deliang, Shenzhen Guangdong 518057 (CN); CAI, Zhiping, Shenzhen Guangdong 518057 (CN)
(74) Representative: Jansen, Cornelis Marinus
(86) International application number: PCT/CN2009/075172
(87) International publication number: WO 2011/015003

(57) **Abstract**

The disclosure discloses a method and device for sharing telephone number information. A local mobile terminal sends search request information for target user to at least one selected mobile terminal; the selected mobile terminal receives and identifies the search request information; the selected mobile terminal searches for the telephone number information of the target user in itself according to the search request information and feeds back search result to the local mobile terminal. Because a third party server is not needed to take part in the search, the disclosure guarantees higher real-time performance of search, and because the help of a third party mobile terminal can be further requested during searching process, the effectiveness of search can be guaranteed together.

## Description

### TECHNICAL FIELD

The disclosure relates to the field of mobile communications, especially to a method and device for sharing telephone number information by using a mobile terminal.

### BACKGROUND

With the improvement of operational performance of mobile terminal, it becomes a development trend to realize various information sharing services on the mobile terminal. At present, the main method employed in the field is to pre-store large amounts of information firstly, then perform focused search for the information by means of a third party server to eventually realize information sharing service.

For example, the implementation method of Google search engine is that: firstly, large amounts of information are stored in a server, and then the information are classified according to index conditions; after the user visits the Google website and inputs the keywords, the website will perform focused search on these keywords in the server according to a particular search algorithm; finally the website shares all the information related to the keywords to the user.

However, with the development of society, social relations have become a very important factor that influences the personal development. While having own social relations, each person also hopes to make more friends quickly via own social relations, because it will bring great help for personal development. With the popularization of mobile terminals, such as cell phone, etc., people usually use the phone book provided by the mobile terminal to record their social relations, namely information of relatives and friends, such as telephone numbers, etc.

Stanley Milgram, the social psychologist of Harvard University proposed theory of 'six degree of segmentation' in 1967, namely 'any two persons in the planet can be linked through six intermediaries, on average'. In accordance with the theory, if there is a safe and fast searching method in mobile terminal, and the phone book function of the local terminal can be directly used to achieve the purpose of searching for telephone numbers and quickly extending social relations without via third party server, it will bring great convenience for personal development.

Patent application number CN200410026822, titled 'Method and engine for searching for telephone numbers' discloses a method for realizing telephone number searching by using local phone book and third party server. With such kind of method, personal information is required to be submitted to server by user firstly in searching process, then the server performs focused search for the collected personal information. In the method, if the user does not submit the records which have been updated in the local phone book to the server in time, the server cannot search for the updated records, thus causing lower real-time performance.

### SUMMARY

In view of this, the disclosure mainly aims to provide a method and device for sharing telephone number information to solve such problem of lower real-time performance of search in the existing technology.

To achieve the above object, the technical solution of the disclosure is realized as follows.

A method for sharing telephone number information, comprising following steps:
step A, sending search request information for target user by a local mobile terminal to at least one selected mobile terminal;
step B, receiving and identifying the search request information by the selected mobile terminal;
step C, searching for telephone number information of target user in the selected mobile terminal itself according to the search request information and feeding back a search result to the local mobile terminal by the selected mobile terminal.

After step B, the method may further comprise:
step B1, authenticating search authority of the mobile terminal requesting search by the selected mobile terminal, then shifting to step C after the authentication is passed.

After completing the search and before feeding back the search result, step C may further comprise:
step C1, determining whether the telephone number information of the target user is in the search result by the selected mobile terminal, if yes, shifting to step C2, or else, shifting to step C3;
step C2, sending the search result by the selected mobile terminal to the local mobile terminal, and terminating the flow;
step C3, sending the search request information by the selected mobile terminal to a third party mobile terminal, and executing step B by the third party mobile terminal as the selected mobile terminal.

In step C3, when the third party mobile terminal functions as the selected mobile terminal, determining whether search level to which the third party mobile terminal belongs is less than a set threshold, if not, directly sending the search result to the local mobile terminal by the third party mobile terminal after completing search, and terminating the search flow; if yes, executing step C1 after the third party mobile terminal completes the search.

A device for sharing telephone number information, comprising:
an information identification module, which is configured to receive and identify search request information for target user;
a searching module, which is configured to search for telephone number information of target user in a mobile terminal to which the searching module itself belongs according to the search request information and provide the telephone number information of the target user; and send the search request information.

The device may further comprise:
a determining module, which is configured to determine whether the telephone number information of the target user is in search result acquired by the searching module, if not, send the search request information to a third party mobile terminal.

The device may further comprise:
an authority authenticating module, which is configured to authenticate search authority of the mobile terminal requesting search, and allow the searching module to execute search operation after the authentication is passed.

The device may further comprise:
a displaying module, which is configured to display user prompt including the result acquired by the search.

The mobile terminal may further comprise: a transceiving module, which is configured to support search-related communication between the mobile terminal to which the transceiving module belongs and the outside.

The mobile terminal may function as a local mobile terminal; the transceiving module may further send the search request information to at least one selected mobile terminal.

It is thus clear that the method and device of the disclosure can guarantee higher real-time performance of search as the third party server is not needed to participate; moreover, because the help of the third party mobile terminal can be further requested during searching process, the effectiveness of search can be guaranteed while improving the real-time performance of search.

### BRIEF DESCRIPTION OF THE DRAWINGS

Fig. 1 is a schematic diagram illustrating the searching process according to an embodiment of the disclosure;
Fig. 2 is a diagram illustrating the format of search request information according to an embodiment of the disclosure;
Fig. 3 is a diagram illustrating the format of feedback information after the search is successful according to an embodiment of the disclosure;
Fig. 4 is a diagram illustrating the format of authority authentication request information according to an embodiment of the disclosure;
Fig. 5 is a diagram illustrating the format of authority authentication accepting information according to an embodiment of the disclosure;
Fig. 6 is a flowchart of performing authority authentication among the mobile terminals according to an embodiment of the disclosure;
Fig. 7 is a diagram illustrating the format of search failure information of a mobile terminal according to an embodiment of the disclosure;
Fig. 8 is a structural schematic diagram of a mobile terminal according to an embodiment of the disclosure.

### DETAILED DESCRIPTION

To solve the problem of lower real-time performance of search in the existing technology, the disclosure provides a method for sharing telephone number information. The disclosure is explained below with reference to the accompanying drawings and two embodiments in detail. It should be appreciated that the specific embodiments described herein are just used for explicating the disclosure and not intended to limit the disclosure.

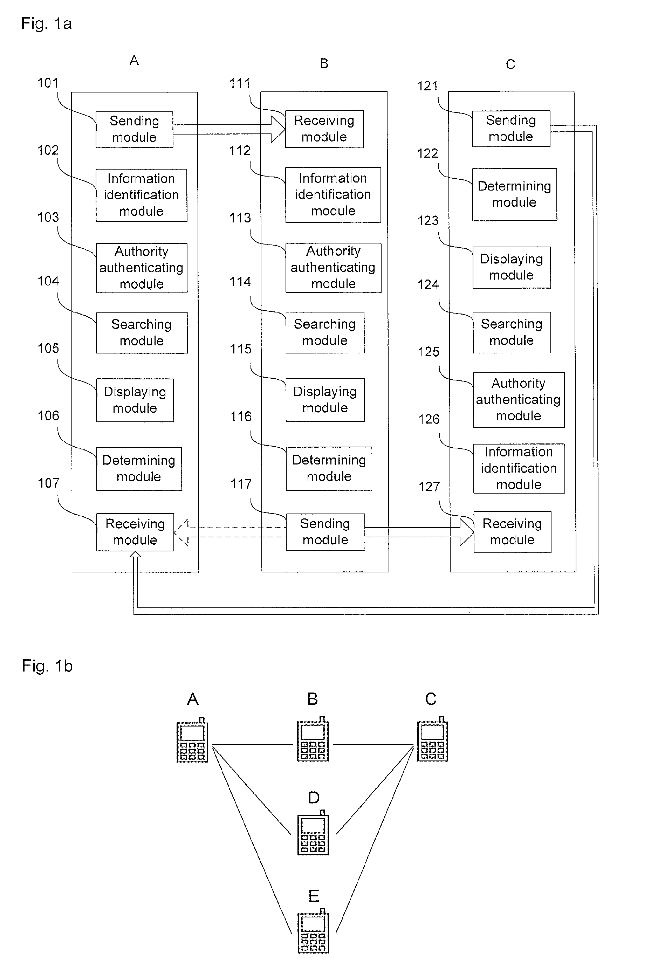

Fig. 1 (a) is the first embodiment of the disclosure.

Described below is a process of performing searching and sharing information by local user A through user B and user C, while the process that A shares the telephone number information of a target user D is taken as the embodiment, with reference to Fig. 1 (a).
(1) The user A thinks that the user D is most possibly in the phone book of the user B, so the user A sends authority authenticating searching information to the user B by using sending module 101 of mobile terminal, here the user B is selected as starting point of search path.
(2) The mobile terminal of the user B receives the information via receiving module 111, and executes information identification module 112 to determine that the authority authenticating information for requesting search has been received; executes displaying module 115 to prompt the user B to accept the search authority authentication of the user A.
(3) The user A sends search request information to the user B by using the sending module 101 of the mobile terminal, the search request information includes the telephone number of the user A and the name of the user D and the like.
(4) After receiving the information, the mobile terminal of the user B executes the information identification module 112 to determine that the search request information has been received; executes searching module 114 to search for the target user D in the phone book.
(5) Upon the completion of searching, the mobile terminal of the user B executes determining module 116 to determine that the user D is found in the phone book thereof, then sends the telephone number of the user D to the mobile terminal used by the local user A via sending module 117.
(6) The mobile terminal of the user A receives the information indicating the success of searching via receiving module 107, then search is ended, and it is realized that the user A shares the telephone number information of the target user D.

The above is the embodiment that the user A eventually finds the user D through the user B and finishes sharing the telephone number information, which is completed through a first level search. If the user D is not found in the phone book of the user B, then enter second level search, comprising following steps subsequent to part of the content in the step (5):
(A) the mobile terminal of the user B executes the determining module 116 to determine that the user D is not found in the phone book thereof;
(B) with reference to step (1), the displaying module 115 is executed, the user B is prompted to reselect a user in the phone book as new starting point of search path, then the user B selects the user C;
(C) with reference to step (2), the mobile terminal of the user B sends the authority authenticating information to the user C via the sending module 117; the mobile terminal of the user C executes information identification module 126, displaying module 123 and authority authenticating module 125, and passes the search authority authentication of the user B;
(D) with reference to step (3), the mobile terminal of the user B sends the search request information to the user C via the sending module 117;
(E) with reference to step (4), the mobile terminal of the user C executes the information identification module 126 and searching module 124 to search for the user D in phone book;
(F) with reference to step (5), the mobile terminal of the user C executes determining module 122 to determine that the user D is found; at this moment, the telephone number of the user D is directly sent to the local user A by sending module 121.

The above is the embodiment that the user A eventually finds the user D through the user B and the user C and finishes sharing the telephone number information, which is completed through two levels of searching. If the user C still does not find the user D, the above steps of searching will be repeated to prompt the user whether to continue searching; if the user of any level refuses to continue searching, the information is sent to the user A. Six levels of searching at most are allowed in the mobile terminal provided in the embodiment.

Fig. 1 (b) is the second embodiment of the disclosure. As shown in the figure, a process of performing search and sharing the telephone number information of the target user C by the local user A via user B, user D and user E is described, while the process that the user A searches for the target user C is taken as the embodiment.
(1) The local user A thinks it is most possibly to search for the target user C in the phone books of user B, user D and user E, so the user A selects three users including the user B, user D and user E at the same time in the mobile terminal as starting point of search path, then the user A searches for the user C through the three search paths at the same time.
(2) The user A sends the authority authenticating searching information to the three users including the user B, user D and user E at the same time by using the sending module of the mobile terminal.
(3) The respective mobile terminals of the user B, user D and user E receive the information via the receiving modules respectively, execute the information identification modules to determine that the authority authenticating information for requesting search has been received; execute the displaying modules 105 to respectively prompt the respective users thereof to accept the search authority authentication of the user A.
(4) The user A sends the search request information to the user B, user D and user E at the same time by using the sending module of the mobile terminal, the search request information includes the telephone number of the user A and the name of the target user C and the like.
(5) After receiving the information, the respective mobile terminals of the user B, user D and user E respectively execute the information identification modules to determine that the search request information has been received; execute the searching modules to search for the target user C in the phone books respectively.
(6) Upon the completion of searching, the respective mobile terminals of the user B, user D and user E determine whether the search is successful firstly, then send the results of searching success or searching failure to the mobile terminal used by the local user A by using the sending modules.
(7) The mobile terminal of user A receives the results of searching sent by the three users via the receiving module, and executes the displaying module to display the result of searching.

The above is the embodiment of searching for the target user C and sharing the telephone number information thereof by the user A through the user B, user D and user E. It should be illustrated that it is acquiescent in the disclosure that the user A can select 10 users at most at the same time for searching at the same time, but without limiting the number.

The specific realization mode of sending/receiving information mentioned in the context is as follows:
adding Realizing flow of sending module, receiving module, information identification module, searching module, displaying module, authority authenticating module and determining module in the software part only, while the hardware part of the existing module in the mobile terminal is unchanged, which can be conducted through various networks such as GPRS network, TD-SCDMA network, WCDMA network, etc. After receiving the information, the mobile terminal performs determining firstly according to the identifier of the information to distinguish whether the information belongs to search information or ordinary short message or multimedia message, etc.; if the information is the ordinary short message or multimedia message, then the short message or multimedia message processing module is performed; if the information is the search information, then the specific type to which the information belongs is distinguished according to the identifier of the search information, wherein the specific types of the search information comprises: search request information, information for feeding back the target user after the search is successful, authority authentication request information, authority authentication accepting information and searching failure information. Operations, such as reading, determining, etc., on the search information by the mobile terminal are all executed in background, and a prompt module is employed for interacting with the user during the processing process.

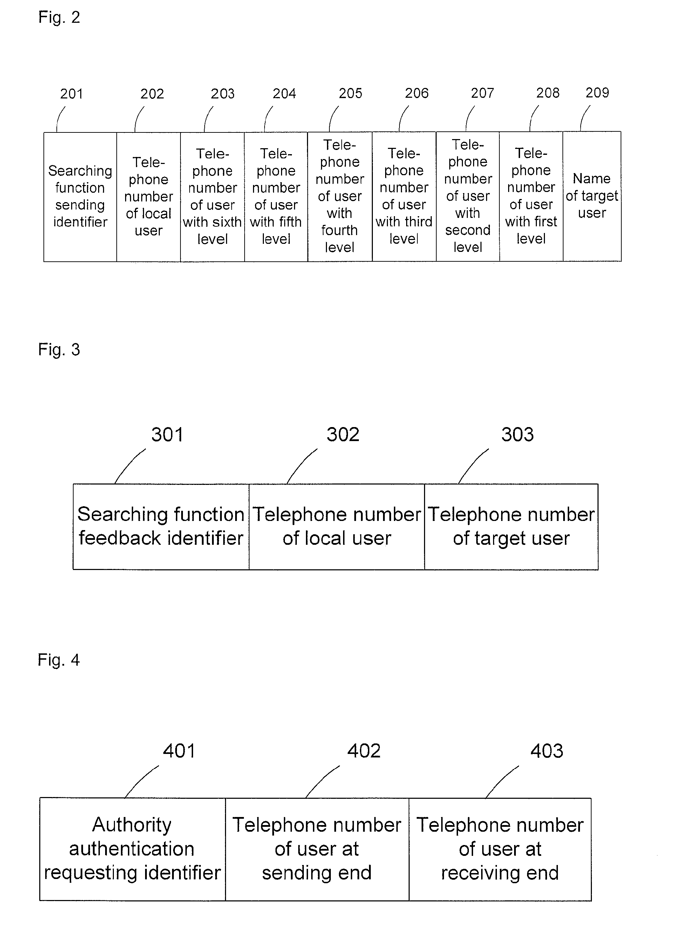

The format of the search request information hereinbefore mentioned is as shown in Fig. 2:
201 is the identifier sent by the Searching function for the mobile terminal to determine whether the currently received information is the search request; 202 and 209 respectively store the telephone number of the local user and the name of the target user; 202 to 208 store the telephone numbers of the users through which the search of each level passes according to a reversed order. The number of search levels in the embodiment can be set to 6 at most, therefore storage space for 6 levels of users are reserved in the information format.

The format of the information for feeding back a target user after the search is successful hereinbefore mentioned is as shown in Fig. 3:
301 is the identifier of feeding back target user information after the search is successful; 302 and 303 are the telephone numbers of the local user and target user respectively; the information has two functions: one is to extract the telephone number of the user A from the information firstly when the user B or user C searches successfully and directly feeds back the telephone number of the target user D to the local user A, then finish the feedback process; and the other function is to directly extract the telephone number of the target user D from the information after the local user A receives the information.

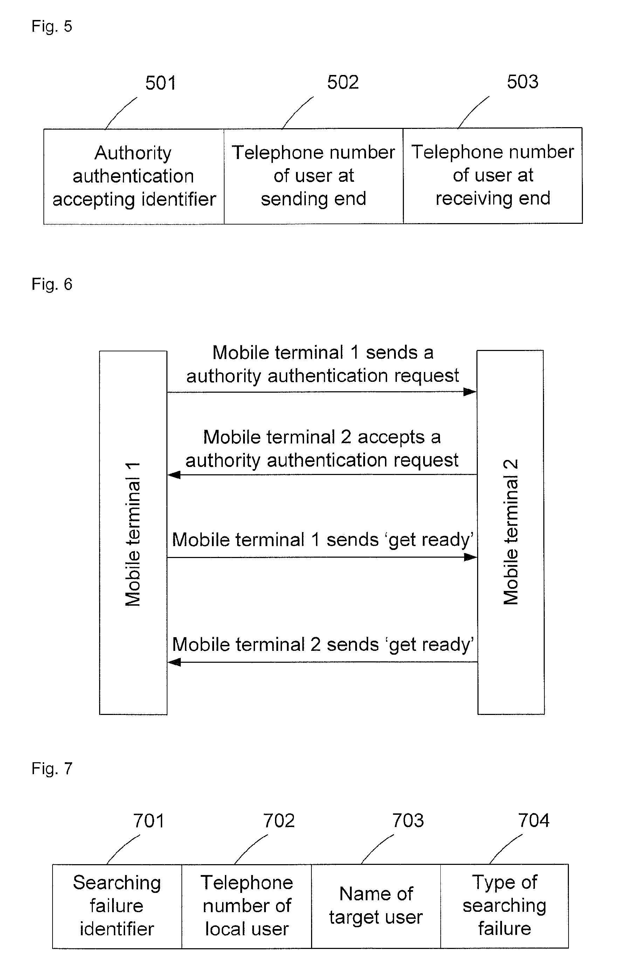

The formats of the authority authentication request information and authority authentication accepting information hereinbefore mentioned are as shown in Fig. 4 and Fig. 5 respectively:
401 is the identifier of requesting authority authentication; 402 and 403 are the telephone numbers of the user at sending end and user at receiving end respectively. 501 is the identifier of accepting authority authentication; 502 and 503 are the telephone numbers of the user at sending end and user at receiving end respectively. Both the information contains the telephone numbers of the user at sending end and user at receiving end, with the purpose of enabling the two parties to make clear of the functions to be completed by themselves during the authentication process.

The mentioned flow of realizing authority authentication hereinbefore is as shown in Fig. 6. While the process that the mobile terminal 1 initiates an authority authentication request to the mobile terminal 2 is taken as embodiment, the specific implementation steps of the authority authentication flow are further explained.

Step 1: the mobile terminal 1 sends the authority authentication request information to the mobile terminal 2, wherein the format of the authority authentication request information is as shown in Fig. 4.

Step 2: after receiving the authority authentication request information sent by the mobile terminal 1, the mobile terminal 2 calls prompt module to prompt the local user whether to accept authentication of this time; if the user accepts the authority authentication of this time, then feeds back the authentication accepting information to the mobile terminal 1 immediately, wherein the format of the feedback information is as shown in Fig. 5; or else, feeds back the authentication refusing information to the mobile terminal 1 via sending module.

Step 3: after receiving the authority authentication accepting information, the mobile terminal 1 checks the operation state of local host immediately, then sends the 'get ready' information of local host to the mobile terminal 2; after receiving the 'get ready' information, the mobile terminal 2 sends the 'get ready' information to the mobile terminal 1 after checking the state of local host.

The mobile terminal 1 and mobile terminal 2 complete the flow of the search authority authentication through two handshake operations.

The format of searching failure information mentioned hereinbefore is as shown in Fig. 7. 701 is the identifier of searching failure; 702 and 703 are the telephone number of the local user and the name of the target user respectively; 704 is the type of searching failure, including trigger failure, the selected user refusing to continue searching, and the target being failed to be found while the search reaching to the sixth level.

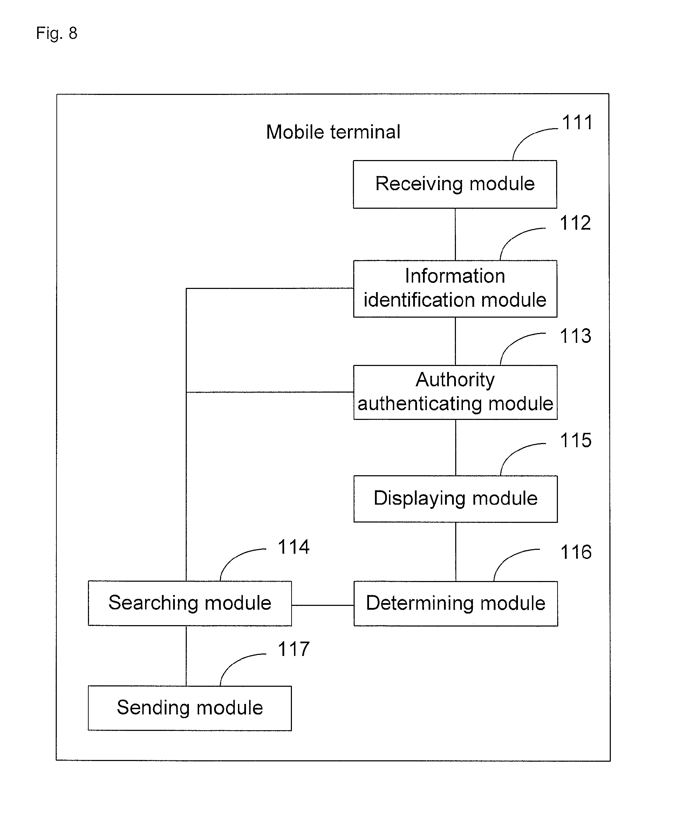

The mobile terminal of the disclosure, such as the mobile terminal used by the user B in embodiment 1 shown in Fig. 8, which comprises four basic modules: a sending module 117, a receiving module 111, an information identification module 112, and a searching module 114, and further comprises an authority authenticating module 113, a displaying module 115 and a determining module 116.

The sending module 117, which is configured to send information, related to search, to other users;

The receiving module 111, which is configured to receive information, related to search, sent by other users;

The information identification module 112, which is configured to identify the information received by the receiving module 111, and determine whether the information is the information requesting search;

The searching module 114, which is configured to search for the target user D in phone book according to the information requesting search received by the receiving module 111, and acquire the telephone number information of the target user D;
further comprising following modules:

The displaying module 115, which is configured to interact with the user by the mobile terminal, display the search result of the searching module 114 and prompt user to carry out the operation of next step;

The authority authenticating module 113, which is configured to authenticate the search authority of the user A requesting search, after the authentication is passed, the displaying module 115 displays authentication passing information and indicates the searching module 114 to execute search operation;

The determining module 116, which is configured to determine whether the searching module 114 searches successfully; if the search fails, the displaying module 115 is used to prompt the user B to select another user for continuing searching; if the search succeeds, the sending module 117 is used to directly send the telephone number information of the target user D to the local user A.

In general, the above receiving module 111 and sending module 117 can be uniformly configured and collectively called transceiving module; moreover, the above device capable of realizing sharing the telephone number information can be set in the user terminal or other devices, as long as the telephone number information can be shared smoothly. In addition, the above search request information can be sent out by the searching module via the transceiving module.

As the preferred embodiments of the disclosure have been disclosed, those skilled in the art should realize that various improvements, additions and replacements are also possible, therefore the scope of the disclosure should not be limited by the above embodiments.

## Claims

1. A method for sharing telephone number information, comprising following steps:
step A, sending search request information for target user by a local mobile terminal to at least one selected mobile terminal;
step B, receiving and identifying the search request information by the selected mobile terminal;
step C, searching for telephone number information of target user in the selected mobile terminal itself according to the search request information and feeding back a search result to the local mobile terminal by the selected mobile terminal.

2. The method according to claim 1, after step B, further comprising:
step B1, authenticating search authority of the mobile terminal requesting search by the selected mobile terminal, then shifting to step C after the authentication is passed.

3. The method according to claim 1, wherein after completing the search and before feeding back the search result, step C further comprises:
step C1, determining whether the telephone number information of the target user is in the search result by the selected mobile terminal, if yes, shifting to step C2, or else, shifting to step C3;
step C2, sending the search result by the selected mobile terminal to the local mobile terminal, and terminating the flow;
step C3, sending the search request information by the selected mobile terminal to a third party mobile terminal, and executing step B by the third party mobile terminal as the selected mobile terminal.

4. The method according to claim 3, wherein in step C3, when the third party mobile terminal functions as the selected mobile terminal, determining whether search level to which the third party mobile terminal belongs is less than a set threshold, if not, directly sending the search result to the local mobile terminal by the third party mobile terminal after completing search, and terminating the search flow; if yes, executing step C1 after the third party mobile terminal completes the search.

5. A device for sharing telephone number information, comprising:
an information identification module, which is configured to receive and identify search request information for target user;
a searching module, which is configured to search for telephone number information of target user in a mobile terminal to which the searching module itself belongs according to the search request information and provide the telephone number information of the target user; and send the search request information.

6. The device according to claim 5, further comprising:
a determining module, which is configured to determine whether the telephone number information of the target user is in search result acquired by the searching module, if not, send the search request information to a third party mobile terminal.

7. The device according to claim 5 or 6, further comprising:
an authority authenticating module, which is configured to authenticate search authority of the mobile terminal requesting search, and allow the searching module to execute search operation after the authentication is passed.

8. The device according to claim 5, further comprising:
a displaying module, which is configured to display user prompt comprising the result acquired by the search.

9. The device according to claim 5, wherein the mobile terminal further comprises:
a transceiving module, which is configured to support search-related communication between the mobile terminal to which the transceiving module belongs and the outside.

10. The device according to claim 9, wherein the mobile terminal functions as a local mobile terminal; the transceiving module further sends search request information to at least one selected mobile terminal.
